# EUROPÄISCHE PATENTANMELDUNG

(11) **EP 4 851 074 A1**
(43) Veröffentlichungstag der Anmeldung: **09.12.2026**
(21) Anmeldenummer: 25181510.6
(22) Anmeldetag: 06.06.2025
(51) Int. Cl.: B65G 1/02

(54) **REGAL FÜR STÜCKGUT**

(71) Anmelder: voestalpine Krems Finaltechnik GmbH, 3502 Krems-Lerchenfeld (AT)
(72) Erfinder: Schranz, Michael, 3500 Krems an der Donau (AT); Glassner, Christoph, 3620 Spitz an der Donau (AT)
(74) Vertreter: Jell, Friedrich

(57) **Zusammenfassung**

Es wird ein Regal (1) für Stückgut (2), insbesondere Paletten, zumindest eine rückseitig des Regals (1) vorgesehene Durchschubsicherung (8a, 8b, 8c, 8d) gezeigt. Um hohe Sicherheit zu erreichen, wird vorgeschlagen, dass die eine Profilform aufweisende Durchschubsicherung (8a, 8b, 8c, 8d) ab der Stückgutauflage (4) mit einem den Anschlag (9) aufweisenden und plastisch verformbaren Abschnitt (10b) frei auskragt, und dass die Durchschubsicherung (8a, 8b, 8c, 8d) eine diese durchdringende Aussparung (12) aufweist, die vom Befestigungsabschnitt (10a) der Durchschubsicherung (8a, 8b, 8c, 8d) in Richtung des frei auskragenden Abschnitts (10b) gesehen nach dem Befestigungsabschnitt (10a) angeordnet ist.

## Beschreibung

Die Erfindung betrifft ein Regal für Stückgut, insbesondere Paletten, Regal für Stückgut, insbesondere Paletten, mit mindestens einem zur Vorderseite des Regals zur Ein- und Auslagerung von Stückgut offenen oder öffenbaren Regalfach, das eine Stückgutauflage für das Stückgut und zumindest eine rückseitig des Regals vorgesehene Durchschubsicherung aufweist, die einen der Stückgutauflage vorspringenden Anschlag für das Stückgut und einen Befestigungsabschnitt aufweist.

In der Lagertechnik werden Regale für Stückgut, insbesondere Paletten, eingesetzt. Diese Regale verfügen über mindestens ein zur Vorderseite offenes oder öffenbares Regalfach, das mit einer Stückgutauflage für das Stückgut ausgestattet ist. Häufig ist zudem eine Durchschubsicherung integriert, die verhindert, dass das Lagergut unkontrolliert über die hintere Regalkante hinausragt oder durchgeschoben wird.

Eine solche Durchschubsicherung kann beispielsweise durch eine Platte realisiert werden, die rückseitig des Regals am Ende der Stückgutauflage befestigt ist (vgl. EP0077885B1). Diese Platte bildet einen der Stückgutauflage vorspringenden Anschlag für das Stückgut. Schlägt ein Stückgut an die Durchschubsicherung an, folgt die Platte einer Biegelinie in Richtung der Einschubrichtung des Stückguts. Diese Verformung begünstigt nachteilig, dass das Stückgut über die Sicherung hinwegspringt, wodurch die Fähigkeit der Durchschubsicherung, hoher Anprallenergie standzuhalten, begrenzt wird.

Die Erfindung hat sich daher ausgehend vom Eingangs geschilderten Stand der Technik die Aufgabe gestellt, eine Durchschubsicherung zu schaffen, die konstruktiv einfach ausgebildet ist, dennoch aber vergleichsweise hoher Anprallenergie zuverlässig standhalten kann.

Die Erfindung löst die gestellte Aufgabe durch die Merkmale des Anspruchs 1.

Kragt die eine Profilform aufweisende Durchschubsicherung ab der Stückgutauflage mit einem den Anschlag aufweisenden und plastisch verformbaren Abschnitt frei aus, und weist die Durchschubsicherung eine diese durchdringende Aussparung auf, die vom Befestigungsabschnitt der Durchschubsicherung in Richtung des frei auskragenden Abschnitts gesehen nach dem Befestigungsabschnitt angeordnet ist, kann der aus dem Stand der Technik bekannte Nachteil des vornehmlichen Ausweichens der Durchschubsicherung in Richtung der Einschubrichtung des Stückguts vermieden werden. Dieser Verformungsabschnitt an der Durchschubsicherung eröffnet sohin die Möglichkeit, eine höhere Anprallenergie zuverlässig aufzunehmen. Zudem kann die Profilform in Verbindung mit der Aussparung im Anprallfall mehr Anprallenergie durch eine sich ergebende kombinierte plastische Verformung aufnehmen.

Die erfindungsgemäße Durchschubsicherung kann damit zuverlässig eine höhere Anprallenergie aufnehmen und somit eine verbesserte Sicherheit in Regalsystemen gewährleisten, was insbesondere auch bei einer Lagerung von vergleichsweise schwerem Stückgut, wie Paletten, von großem Vorteil sein kann.

Weist die Durchschubsicherung zwischen dem Befestigungsabschnitt und dem frei auskragenden Abschnitt einen plastisch verformbaren Auflagerabschnitt auf, kann der Verformungsabschnitt der Durchschubsicherung auf den Auflagerbereich erweitert werden. Der sich daraus in Längsrichtung ergebende Freiheitsgrad ermöglicht es nämlich, auch Anprallenergie im Auflagerabschnitt aufzunehmen, wodurch die Sicherheit des Regalsystems weiter erhöht wird.

Diese plastische Verformung der Durchschubsicherung im Verformungsabschnitt kann weiter verbessert werden, wenn die Aussparung zumindest abschnittsweise im frei auskragenden Bereich der Durchschubsicherung angeordnet ist. Durch diese Anordnung kann die Durchschubsicherung vorteilhafter auf die Anprallenergie reagieren und die kombinierte plastische Biegung der Durchschubsicherung unterstützen.

Vorstehendes kann weiter verbessert werden, wenn beispielsweise die Aussparung auch abschnittsweise im Auflagerabschnitt der Durchschubsicherung angeordnet ist und sich eine Kombination aus plastischer Verformung im Auflagerabschnitt und im frei auskragenden Bereich ergeben kann.

Vorzugsweise ist die Aussparung im Wesentlichen auf Höhe der Stückgutauflage für das Stückgut angeordnet, um damit einen Anschlag mit Anschlagkante für das Stückgut zu schaffen, in die beispielsweise ein Fuß des Stückguts eingreifen kann. Auch ist vorstellbar, dass sich das Stückgut in der Aussparung verhakt, beispielsweise wenn das Stückgut einen Holzwerkstoff aufweist, um die Sicherheit des Regalsystems weiter zu erhöhen.

Vorzugsweise weist die Aussparung eine geschlossene Umfangskontur auf, um trotz Aussparung an der Durchschubsicherung eine vergleichsweise hohe Stabilität und Festigkeit zu gewährleisten. Diese geschlossene Umfangskontur kann durch eine Vielzahl von Formen und Geometrien realisiert werden, wie zum Beispiel durch einen Kreis, ein Rechteck oder ein Polygon.

Beispielsweise ist die Aussparung als kreisrundes oder ovales Loch oder als Langloch ausgebildet, was die Konstruktion weiter vereinfachen kann.

Vorzugsweise verläuft die Aussparung über eine zwischen zwei Schenkeln der Durchschubsicherung verlaufende Winkelkante der Durchschubsicherung, um die plastische Verformung der Durchschubsicherung weiter zu verbessern. Durch diese Anordnung der Aussparung kann nämlich gezielt die versteifende Eigenschaft der Winkelkante angepasst werden, wodurch die Durchschubsicherung schneller auf Verformungskräfte reagieren und damit auch plastisch aufnehmen kann. Dies verbessert die Durchschubsicherung weiter, um das Stückgut gegen ein Hinausragen oder Durchschieben im Regal zu sichern.

Diese Absicherung des Stückguts gegen ein Hinausragen oder Durchschieben im Regal kann beispielsweise verbessert werden, wenn pro Stückgutauflage für ein Stückgut zumindest zwei, insbesondere ein Vielfaches von zwei, Durchschubsicherungen der zumindest einen Durchschubsicherung vorgesehen sind.

Vorzugsweise ist für zumindest zwei Stückgutfüße des Stückguts je eine Durchschubsicherung der zumindest einen Durchschubsicherung vorgesehen, was bereits für eine hohe Sicherheit ausreichend sein kann.

Die Montage und Wartung der beispielsweise plastisch verformten Durchschubsicherung kann weiter erleichtert werden, wenn die Durchschubsicherung an einem Längsträger des Regals oder an einem an Längsträgern lastenden Tiefensteg des Regals befestigt ist.

Es ist aber auch vorstellbar, dass die Durchschubsicherung an einer Shuttle-Führungsschiene des Regals befestigt ist.

Dies insbesondere dann, wenn die Befestigung über zumindest eine Schraubverbindung erfolgt.

Auch ist vorstellbar, dass im Befestigungsabschnitt die Durchschubsicherung an zumindest einer Befestigungsstelle befestigt ist. An den Befestigungsstellen kann jeweils eine Schraubverbindung zum Regal vorgesehen sein, was die Konstruktion vereinfacht und die Wartung erleichtert. Vorzugsweise ist die Durchschubsicherung an zwei Befestigungsstellen am Regal befestigt. Beispielsweise befindet sich die zumindest eine Befestigungsstelle, insbesondere ausschließlich, an einem Schenkel der Durchschubsicherung.

Die Aufnahme von Anprallenergie durch plastische Verformung der Durchschubsicherung kann weiter erhöht werden, wenn die Durchschubsicherung eine offene Profilform, insbesondere eine Winkelprofilform, aufweist.

Hierbei kann sich eine Winkelprofilform insbesondere auszeichnen, welche Profilform mit der Aussparung einfach herzustellen ist und für Wartungszwecke von Vorteil sein kann, bei denen es eines Austausches bedarf.

Dies besonders, wenn die Winkelprofilform der Durchschubsicherung einen Innenwinkel im Bereich von 60 bis 120 Grad aufweist. Besonders dann, wenn dieser Innenwinkel im Bereich von 70 bis 90 Grad liegt, wobei beispielsweise eine rechtwinkelige Winkelprofilform insbesondere auszeichnen kann.

Auch kann dem Verformungsverhalten der Durchschubsicherung eine Vorzugsrichtung in der plastischen Torsion gegeben werden, indem die zwei Schenkel der Durchschubsicherung zueinander unterschiedliche Schenkellängen aufweisen.

Vergleichsweise hohe plastische Verformungskräfte können aufgenommen werden, wenn die Durchschubsicherung aus einem metallischen Werkstoff, insbesondere Stahl, besteht.

In den Figuren ist beispielsweise der Erfindungsgegenstand anhand eines Ausführungsbeispiels näher dargestellt. Es zeigen
- Fig. 1: eine Rückansicht auf ein Regal für Stückgut,
- Fig. 2: eine Rückansicht auf eine Durchschubsicherung des nach Fig. 1 dargestellten Regals,
- Fig. 3: eine Seitenansicht der Durchschubsicherung des nach Fig. 2,
- Fig. 4: eine Draufsicht auf die Durchschubsicherung in Profillängsrichtung,
- Fig. 5: jene nach den Figuren 1 bis 4 dargestellte Durchschubsicherung nach einem Anprallfall und
- Fig. 6: eine alternative Befestigung der Durchschubsicherung an einer Shuttle-Führungsschiene des Regals.

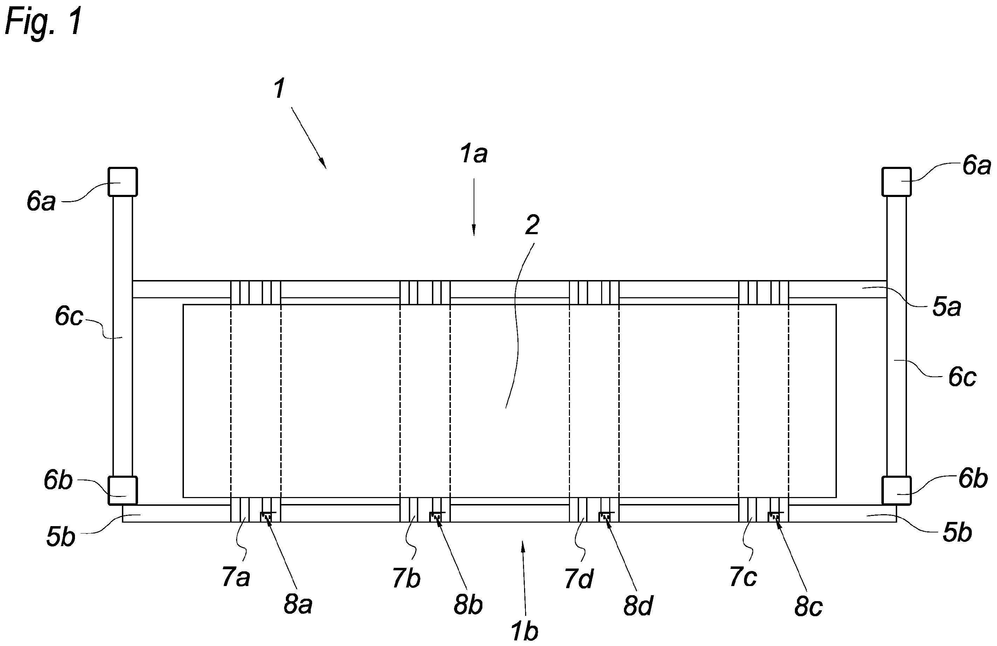

Nach Fig. 1 ist beispielsweise ein als Längstraversenregal ausgeführtes Regal 1 dargestellt, das Stückgüter 2, nämlich wie dargestellt Paletten, aufnehmen kann. Hierzu weist das Regal 1 mehrere offene Regalfächer 3 auf, die nebeneinander und/oder übereinander angeordnet und gleich ausgestaltet sind. Aus Gründen der einfachen Lesbarkeit wird lediglich ein Regalfach 3 von den Regalfächern des Regals 1 weiter beschrieben.

Das Regalfach 3 ist zur Vorderseite 1a des Regals 1 entlang einer nicht dargestellten Lagergasse offen, um Stückgut 2 ein- und auslagern zu können. Das Regalfach 3 nimmt im dargestellten Fall ein Stückgut 2 auf. Das Regalfach 3 kann aber auch -was nicht dargestellt wurde- zur Mehrplatzlagerung von Stückgütern ausgebildet sein. Zudem ist jede Größe des Regals 1 denkbar - unter anderem damit, Stückgut hintereinander im Regalfach 3 zu lagern.

Das Regalfach 3 weist zur Lagerung des Stückguts 2 eine Stückgutauflage 4, die sich auf zwei horizontal und parallel versetzt verlaufenden Längsträgern 5a, 5b befindet. Diese Längsträger 5a, 5b lasten an den vorderen oder hinteren Vertikalstehern 6a, 6b des Regals 1, zwischen welchen Vertikalstehern 6a, 6b je ein Verbindungsträger 6c verläuft. Auf den Längsträgern 5a, 5b sind mehrere Tiefenstege 7a, 7b, 7c, 7d angeordnet, auf denen das Stückgut 2 direkt lastet. Die vier Tiefenstege 7a, 7b, 7c, 7d bilden mit deren oberen flachen Stegen die Stückgutauflage 4 für das Stückgut 2 des Regalfachs 3 aus.

Auf der Rückseite 1b des Regals 1 sind mehrere Durchschubsicherungen 8a, 8b, 8c, 8d angeordnet, mit deren Hilfe Einlagerungsfehler, beispielsweise ein zu tiefes Einlagern des Stückguts 2, verhindert werden können. So weist die Durchschubsicherung 8a, 8b, 8c, 8d einen der Stückgutauflage 4 vorspringenden Anschlag 9 für das Stückgut 2 und einen Befestigungsabschnitt 10a zu deren Befestigung am Regal 1 auf. Im Befestigungsabschnitt 10a sind die Durchschubsicherung 8a, 8b, 8c, 8d über je zwei Schraubverbindungen 11, aufweisend je eine Kopfschraube 11a und eine damit zusammenwirkende Schraubenmutter 11b, mit dem betreffenden Tiefensteg 7a, 7b, 7c, 7d fest verbunden. Hierzu sind je zwei Montageöffnungen im Befestigungsabschnitt 10a für je eine Schraubverbindung 11 vorgesehen.

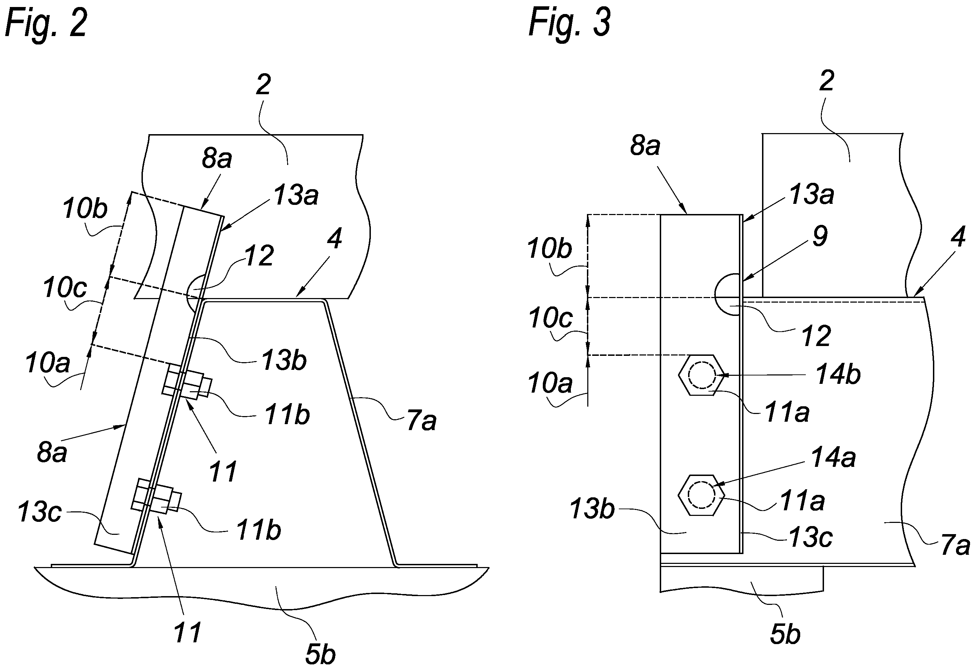

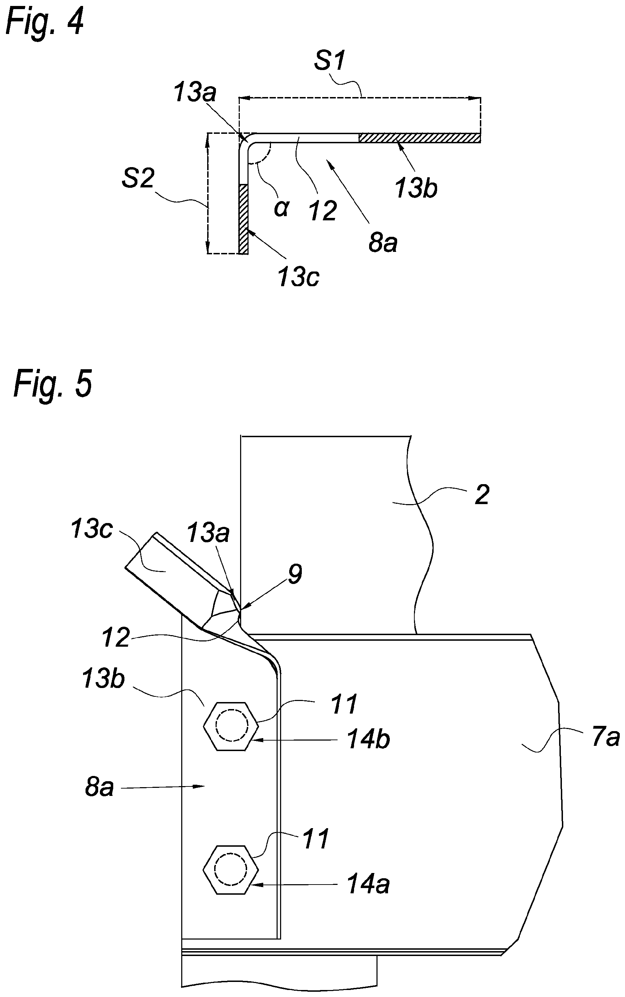

Erfindungsgemäß ist das Regal 1 besonders robust gegenüber Einlagerungsfehlern. Die eine Profilform aufweisende Durchschubsicherung 8a, 8b, 8c, 8d kragt nämlich ab der Stückgutauflage 4 mit einem und plastisch verformbaren Abschnitt 10b frei aus, welcher Abschnitt 10b den Anschlag 9 aufweist, wie insbesondere in den Figuren 3 und 4 zu erkennen ist. Diese Profilform, bevorzugt Winkelprofilform, ermöglicht jene beispielsweise in Fig. 5 dargestellte kombinierte plastische Biegung, um damit hohe Anprallkräfte aufzunehmen und zu absorbieren.

Zudem weist die Durchschubsicherung 8a, 8b, 8c, 8d eine diese durchdringende Aussparung 12 auf, die vom Befestigungsabschnitt 10a der Durchschubsicherung 8a, 8b, 8c, 8d in Richtung des frei auskragenden Abschnitts 10b gesehen nach dem Befestigungsabschnitt 10a angeordnet ist. Jene im Befestigungsabschnitt 10a gehemmte plastische Verformbarkeit der Durchschubsicherung 8a, 8b, 8c, 8d wird durch diese Aussparung 12 erleichtert. Die Aussparung 12 kann zudem das Widerstandsmoment der Durchschubsicherung 8a, 8b, 8c, 8d derart bestimmen, dass die Durchschubsicherung 8a, 8b, 8c, 8d besonders schnell anspricht, Anprallenergie zu dissipieren, beispielsweise durch multiaxiale Verformung, wie in Fig. 4 dargestellt.

Zudem weist -wie in Fig. 2 und 3 zu erkennen- die Durchschubsicherung 8a, 8b, 8c, 8d zwischen dem Befestigungsabschnitt 10a und dem frei auskragenden Abschnitt 10b einen plastisch verformbaren Auflagerabschnitt 10c auf, der auch plastisch verformbar ist, wie dies in Fig. 5 dargestellt ist. Dies erweitert den plastischen Verformungsabschnitt der Durchschubsicherung 8a, 8b, 8c, 8d um den Auflagerabschnitt 10c, was die Standfestigkeit des Regals 1 gegenüber Einlagerungsfehlern weiter erhöht.

Wie nach den Figuren 2 und 3 zu erkennen, ist die Aussparung abschnittsweise im frei auskragenden Abschnitt 10b und auch abschnittsweise im Auflagerabschnitt 10c angeordnet. Damit wird eine Durchschubsicherung geschaffen, die schnell anspricht und durch multiaxiale Verformung, wie in Fig. 4 dargestellt, eine besonders hohe Energieaufnahme ermöglicht. Dazu trägt bei, dass diese Aussparung 12 im Wesentlichen auf Höhe der Stückgutauflage 4 für das Stückgut 2 angeordnet ist.

Die Aussparung 12 weist zudem eine geschlossene Umfangskontur 12a eines ovalen Lochs 12b auf. Auch verläuft diese Aussparung 12 über eine Winkelkante 13a, die sich zwischen zwei Schenkeln 13b, 13c der Winkelprofilform der Durchschubsicherung 8a, 8b, 8c, 8d befindet, wie in Fig. 4 insbesondere zu erkennen.

Diese Winkelprofilform der Durchschubsicherung weist einen Innenwinkel α von 90 Grad auf. Zudem weisen die zwei Schenkel 13b, 13c der Durchschubsicherung 8a, 8b, 8c, 8d zueinander unterschiedliche Schenkellängen S1, S2 auf, was die multiaxiale Verformung weiter verbessert. Der Schenkel 13b mit der größeren Schenkellänge weist die beiden Befestigungsstellen 14a, 14b für je eine Schraubverbindung 11 auf.

Wie zudem den Figuren 1 und 2 zu entnehmen ist, sind für jede Stückgutauflage 4 vier Durchschubsicherungen 8a, 8b, 8c, 8d vorgesehen. Damit steht für jeden Stückgutfuß 2a, 2b, 2c, 2d des Stückguts 2 je eine Durchschubsicherung 8a, 8b, 8c, 8d zur Verfügung, was ein besonders standfestes Regal 1 schafft.

Dies unter anderem auch dadurch, weil die Durchschubsicherung 8a, 8b, 8c, 8d aus einem metallischen Werkstoff, nämlich Stahl, besteht.

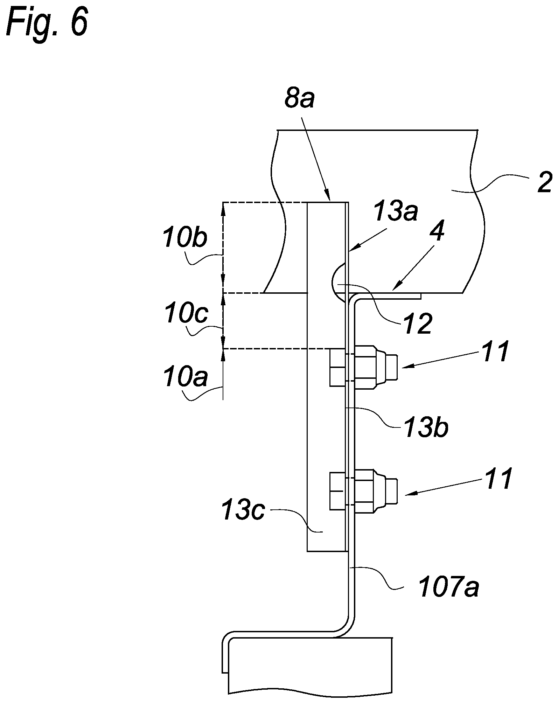

In Fig. 6 ist eine alternative Montage der Durchschubsicherung 7 dargestellt. Hier ist die Durchschubsicherung nicht, wie nach Fig. 2 und 3 dargestellt, an einem Tiefensteg 7a befestigt, sondern an einer Shuttle-Führungsschiene 107a des Regals 1.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably", und für "gegebenenfalls", ins Englische übersetzt als "if necessary".

## Patentansprüche

1. Regal für Stückgut (2), insbesondere Paletten, mit mindestens einem zur Vorderseite des Regals (1) zur Ein- und Auslagerung von Stückgut (2) offenen oder öffenbaren Regalfach (3), das eine Stückgutauflage (4) für das Stückgut (2) und zumindest eine rückseitig des Regals (1) vorgesehene Durchschubsicherung (8a, 8b, 8c, 8d) aufweist, die einen der Stückgutauflage (4) vorspringenden Anschlag (9) für das Stückgut (2) und einen Befestigungsabschnitt (10a) aufweist, **dadurch gekennzeichnet, dass** die eine Profilform aufweisende Durchschubsicherung (8a, 8b, 8c, 8d) ab der Stückgutauflage (4) mit einem den Anschlag (9) aufweisenden und plastisch verformbaren Abschnitt (10b) frei auskragt, und dass die Durchschubsicherung (8a, 8b, 8c, 8d) eine diese durchdringende Aussparung (12) aufweist, die vom Befestigungsabschnitt (10a) der Durchschubsicherung (8a, 8b, 8c, 8d) in Richtung des frei auskragenden Abschnitts (10b) gesehen nach dem Befestigungsabschnitt (10a) angeordnet ist.

2. Regal nach Anspruch 1, **dadurch gekennzeichnet, dass** die Durchschubsicherung (8a, 8b, 8c, 8d) zwischen dem Befestigungsabschnitt (10a) und dem frei auskragenden Abschnitt (10b) einen plastisch verformbaren Auflagerabschnitt (10c) aufweist.

3. Regal nach einem der Ansprüche 1 bis 2, **dadurch gekennzeichnet, dass** die Aussparung (12) zumindest abschnittsweise im frei auskragenden Abschnitt (10b) der Durchschubsicherung (8a, 8b, 8c, 8d) angeordnet ist.

4. Regal nach Anspruch 2 und 3, **dadurch gekennzeichnet, dass** die Aussparung (12) auch abschnittsweise im Auflagerabschnitt (10c) der Durchschubsicherung (8a, 8b, 8c, 8d) angeordnet ist.

5. Regal nach einem der Ansprüche 1 bis 4, **dadurch gekennzeichnet, dass** die Aussparung (12) im Wesentlichen auf Höhe der Stückgutauflage (4) für das Stückgut (2) angeordnet ist.

6. Regal nach einem der Ansprüche 1 bis 5, **dadurch gekennzeichnet, dass** die Aussparung (12) eine geschlossene Umfangskontur (12a) aufweist und/oder dass die Aussparung (12) als kreisrundes oder ovales Loch (12b) oder als Langloch ausgebildet ist.

7. Regal nach einem der Ansprüche 1 bis 6, **dadurch gekennzeichnet, dass** die Aussparung (12) über eine zwischen zwei Schenkeln (13b, 13c) der Durchschubsicherung (8a, 8b, 8c, 8d) verlaufende Winkelkante (13a) der Durchschubsicherung (8a, 8b, 8c, 8d) verläuft.

8. Regal nach einem der Ansprüche 1 bis 7, **dadurch gekennzeichnet, dass** pro Stückgutauflage (4) für ein Stückgut (2) zumindest zwei, insbesondere ein Vielfaches von zwei, Durchschubsicherungen (8a, 8b, 8c, 8d) der zumindest einen Durchschubsicherung (8a, 8b, 8c, 8d), insbesondere für zumindest zwei Stückgutfüße (2a, 2b, 2c, 2d) des Stückguts (2), vorgesehen sind.

9. Regal nach einem der Ansprüche 1 bis 8, **dadurch gekennzeichnet, dass** die Durchschubsicherung (8a, 8b, 8c, 8d) an einem Längsträger (5a, 5b) des Regals (1), befestigt ist oder dass die Durchschubsicherung (8a, 8b, 8c, 8d) an einem an Längsträgern (5a, 5b) lastenden Tiefensteg (7a, 7b, 7c, 7d) des Regals (1) befestigt ist oder dass die Durchschubsicherung (8a, 8b, 8c, 8d) an einer Shuttle-Führungsschiene (107a) des Regals (1) befestigt ist.

10. Regal nach einem der Ansprüche 1 bis 9, **dadurch gekennzeichnet, dass** im Befestigungsabschnitt (10a) die Durchschubsicherung (8a, 8b, 8c, 8d) an zumindest einer, insbesondere zwei, Befestigungsstelle (14a, 14b), insbesondere über je eine Schraubverbindung (11) des Regals (1), befestigt ist.

11. Regal nach einem der Ansprüche 1 bis 10, **dadurch gekennzeichnet, dass** die Durchschubsicherung (8a, 8b, 8c, 8d) eine offene Profilform, insbesondere eine Winkelprofilform, aufweist.

12. Regal nach Anspruch 11, **dadurch gekennzeichnet, dass** die Winkelprofilform der Durchschubsicherung (8a, 8b, 8c, 8d) einen Innenwinkel (α) im Bereich von 60 bis 120 Grad, insbesondere von 70 bis 90 Grad, beispielsweise rechtwinkelig ist.

13. Regal nach einem der Ansprüche 1 bis 12, **dadurch gekennzeichnet, dass** die zwei Schenkel der Durchschubsicherung (8a, 8b, 8c, 8d) zueinander unterschiedliche Schenkellängen (S1, S2) aufweisen.

14. Regal nach einem der Ansprüche 1 bis 13, **dadurch gekennzeichnet, dass** die Durchschubsicherung (8a, 8b, 8c, 8d) aus einem metallischen Werkstoff, insbesondere Stahl, besteht.
